(19) Europäisches Patentamt
European Patent Office
Office européen des brevets

(11) EP 0 765 119 B1

# (12) EUROPÄISCHE PATENTSCHRIFT

(45) Veröffentlichungstag und Bekanntmachung des Hinweises auf die Patenterteilung:
**02.12.1998 Patentblatt 1998/49**

(21) Anmeldenummer: **95920866.1**

(22) Anmeldetag: **23.05.1995**

(51) Int. Cl.$^6$: **A01N 47/14**
// (A01N47/14, 37:50)

(86) Internationale Anmeldenummer:
**PCT/EP95/01953**

(87) Internationale Veröffentlichungsnummer:
**WO 95/34205 (21.12.1995 Gazette 1995/54)**

## (54) FUNGIZIDE MISCHUNGEN
FUNGICIDAL MIXTURES
MELANGES FONGICIDES

(84) Benannte Vertragsstaaten:
**AT BE CH DE DK ES FR GB GR IE IT LI NL PT SE**

(30) Priorität: **10.06.1994 DE 4420277**

(43) Veröffentlichungstag der Anmeldung:
**02.04.1997 Patentblatt 1997/14**

(73) Patentinhaber:
**BASF AKTIENGESELLSCHAFT**
**67056 Ludwigshafen (DE)**

(72) Erfinder:
- **AMMERMANN, Eberhard**
  **D-64646 Heppenheim (DE)**
- **LORENZ, Gisela**
  **D-67434 Hambach (DE)**
- **MAPPES, Dietrich**
  **D-67368 Westheim (DE)**
- **SCHELBERGER, Klaus**
  **D-67161 Gönnheim (DE)**
- **HAMPEL, Manfred**
  **D-67435 Neustadt (DE)**

(56) Entgegenhaltungen:
**EP-A- 0 253 213**
**EP-A- 0 254 426**
**EP-A- 0 645 089**
**WO-A-95/15083**
**GB-A- 2 267 644**
**GB-A- 2 279 568**

- **RESEARCH DISCLOSURE, Nr. 338, 1992, Havant (GB); ANONYM, Nr. 33893**
- **CHEMICAL ABSTRACTS, Band 118, Nr. 23, 07 Juni 1993, Columbus, OH (US); E. AMMERMANN et al., AN 228112**

Bemerkungen:
Die Akte enthält technische Angaben, die nach dem Eingang der Anmeldung eingereicht wurden und die nicht in dieser Patentschrift enthalten sind.

EP 0 765 119 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine fungizide Mischung, welche

a) den Oximethercarbonsäureester der Formel Ia oder Ib

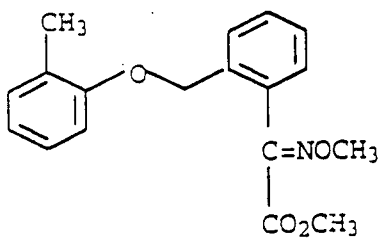

Ia

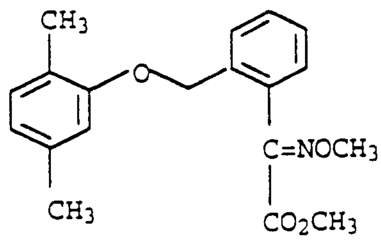

Ib

und

b) ein Dithiocarbamat (II) ausgewählt aus der Gruppe

- Mangan-ethylenbis(dithiocarbamat) (Zinkkomplex) (IIa),
- Mangan-ethylenbis(dithiocarbamat (IIb)
- Zinkammoniat-ethylenbis (dithiocarbamat) (IIc) und
- Zink-ethylenbis(dithiocarbamat) (IId)

in einer synergistisch wirksamen Menge enthalt.

Außerdem betrifft die Erfindung Verfahren zur Bekampfung von Schadpilzen mit Mischungen der Verbindungen I und II und die Verwendung der Verbindungen I und der Verbindungen II zur Herstellung derartiger Mischungen.

Die Verbindungen der Formel I (bzw. Ia und Ib), ihre Herstellung und ihre Wirkung gegen Schadpilze ist aus der Literatur bekannt (EP-A 253 213, und EP-A 254 426). In der EP-A 254 426 wird die Mischbarkeit mit anderen Fungiziden erwähnt.

Aus der EP 531 837 sind synergistische Mischungen der Verbindungen Ia mit bestimmten Fungiziden aus der Klasse der Azole bekannt.

Ebenfalls bekannt sind die Dithiocarbamate II (IIa: common name: Mancozeb, US-A 3,379,610; IIb: common name: Maneb, US-A 2,504,404; IIc: ehem. common name: Metiram, US-A 3,248,400; IId: common name: Zineb, US-A 2,457,674), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und der Verbindungen II oder bei Anwendung der Verbindungen I und der Verbindungen II nacheinander Schadpilze besser bekämpfen lassen als mit den Einzelverbindungen.

Die Verbindungen der Formel I können in Bezug auf die C=X -Doppelbindung in der E- oder der Z-Konfiguration (in Bezug auf die Gruppierung Carbonsäurefunktion) vorliegen. Demgemäß können sie in der erfindungsgemäßen Mischung jeweils entweder als reines E- oder Z-Isomer oder als E/Z-Isomerenmischung Verwendung finden. Bevorzugt findet die E/Z-Isomerenmischung oder das E-Isomer Anwendung, wobei das E-Isomer besonders bevorzugt ist.

Bevorzugt setzt man bei der Bereitstellung der Mischungen die reinen Wirkstoffe I und II ein, denen man je nach Bedarf weitere Wirkstoffe gegen Schadpilze oder andere Schadlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten und Basidionyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen

wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdhüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 50:1 bis 2:1, vorzugsweise 40:1 bis 1,8:1, insbesondere 30:1 bis 1,8:1 (II:I) angewendet.

Die Aufwandmengen der erfindungsgemäßen Mischungen liegen je nach Art des gewünschten Effekts für die Verbindungen I bei 0,005 bis 0,5 kg/ha, vorzugsweise 0,01 bis 0,5 kg/ha, insbesondere 0,01 bis 0,3 kg/ha. Die Aufwandmengen für die Verbindungen II liegen entsprechend bei 0,1 bis 10 kg/ha, vorzugsweise 0,5 bis 5 kg/ha, insbesondere 1 bis 4 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind erfolgt die getrennte oder gemeinsame Applikation der Verbindungen I und II oder der Mischungen aus den Verbindungen I und II durch besprühen oder bestauben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoryliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoryliertes Rizinusöl, Polyoryethylenalkylether oder Polyoxyropylen, Laurylalkoholpolyglycoletheracetat, Sorbitester, Lighin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Impräghierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Anmoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze

Die fungizide Wirkung der Verbindungen und der Mischungen ließ sich durch folgende Versuche zeigen:

Die Wirkstoffe wurden getrennt oder gemeinsam als 20 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

A. Wirksamkeit gegen Plasmopara viticola (Rebenperonospora)

Topfreben (Sorte: "Müller Thurgau") wurden mit der Wirkstoffaufbereitung tropfnaß gespritzt. Nach 8 Tagen wurden die Pflanzen mit einer Zoosporenaufschwemmung des Pilzes *Plasmopara viticola* besprüht und zunächst 48 h bei 24°C und 100% Luftfeuchtigkeit bewahrt. Anschließend beließ man die Testpflanzen für 5 Tage bei 20-30°C im Gewächshaus. Vor der Beurteilung wurden die Pflanzen nochmals für 16 h bei hoher Luftfeuchtigkeit bewahrt. Die Auswertung erfolgte visuell auf den Blattunterseiten.

| Wirkstoff | Aufwandmenge [ppm] | Wirkungsgrad [%] |
|---|---|---|
| -/-* | - | 0 |
| Ia | 31 | 48 |
| Ia | 8 | 0 |
| IIc | 310 | 80 |
| IIc | 80 | 48 |
| **Mischung [Aufwandmenge]** | **Wirkungsgrad [beobachtet]** | **Wirkungsgrad [berechnet]** |
| Ia + IIc<br>31 + 310 | 100 | 90 |
| Ia + IIc<br>8 + 80 | 95 | 48 |

* 77% Befall der unbehandelten Kontrolle

B: Wirksamkeit gegen Phytophthora infestans (Krautfäule)

Blätter von Tomatenpflanzen (Sorte: "Große Fleischtomate") wurden zunächst mit der wäßrigen Aufbereitung der

Wirkstoffe behandelt. Nach ca. 48 h wurden die Pflanzen mit einer Zoosporenaufschlämmung von *Phytophthora infestans* infiziert. Die so behandelten Pflanzen wurden anschließend für 6 Tage bei 16-18°C und einer relativen Luftfeuchtigkeit von 100% inkubiert. Anschließend wurde das Ausmaß der Pilzentwicklung ermittlelt.

| Wirkstoff | Aufwandmenge [ppm] | Wirkungsgrad [%] |
|---|---|---|
| -/-* | - | 0 |
| **Ia** | 8 | 70 |
| **Ia** | 4 | 40 |
| **IIc** | 80 | 85 |
| **IIc** | 40 | 79 |
| **Mischung [Aufwandmenge]** | **Wirkungsgrad [beobachtet]** | **Wirkungsgrad [berechnet]** |
| **Ia + IIc**<br>**8 + 80** | 100 | 95 |
| **Ia + IIc**<br>**4 + 40** | 94 | 88 |

* 34% Befall der unbehandelten Kontrolle

**Patentansprüche**

1. Fungizide Mischung, enthaltend

a) den Oximethercarbonsäureester der Formel I a oder Ib

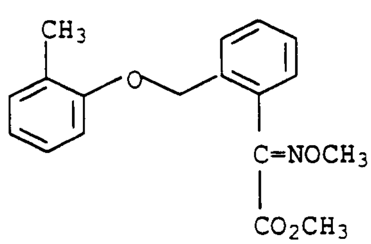

Ia

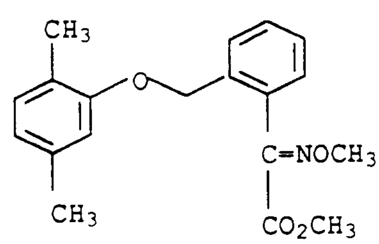

Ib

und

b) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId)

in einer synergistisch wirksamen Menge.

2. Fungizide Mischung nach Anspruch 1, enthaltend ein Oximethercarbonsäureamid der Formel Ia oder Ib gemäß Anspruch 1 und Mangan- ethylenbis(dithiocarbamat) (Zinkkomplex) (IIa).

3. Fungizide Mischung nach Anspruch 1, enthaltend ein Oximethercarbonsäureamid der Formel Ia oder Ib gemäß Anspruch 1 und Mangan- ethylenbis(dithiocarbamat) (IIb).

4. Fungizide Mischung nach Anspruch 1, enthaltend ein Oximethercarbonsäureamid der Formel Ia oder Ib gemäß Anspruch 1 und Zinkammoniat-ethylenbis(dithiocarbamat) (IIc).

5. Fungizide Mischung nach Anspruch 1, enthaltend ein Oximethercarbonsäureamid der Formel Ia oder Ib gemäß Anspruch 1 und Zink- ethylenbis(dithiocarbamat) (IId).

6. Fungizide Mischung nach Anspruch 1, dadurch gekennzeichnet, daß das Gewichtsverhältnis der Verbindung II zu der Verbindung I 50:1 bis 2:1 beträgt.

7. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen Materialien oder Räume mit einer Verbindung der Formel I gemäß Anspruch 1 und einer Verbindung der Formel II gemäß Anspruch 1 behandelt, wobei die Verbindungen I und II in synergistisch wirksamen Mengen verwendet werden.

8. Verfahren nach Anspruch 7, dadurch gekennzeichnet, daß man eine Verbindung I gemäß Anspruch 1 und eine Verbindung 11 gemäß Anspruch 1 gleichzeitig gemeinsam oder getrennt oder nacheinander ausbringt.

9. Verfahren nach Anspruch 7, dadurch gekennzeichnet, daß man die Schadpilze, deren Lebensraum oder die von ihnen freizuhaltenden Pflanzen, Samen, Böden, Flächen, Materialien oder Räume mit 0,005 bis 0,5 kg/ha einer Verbindung der Formel I gemäß Anspruch 1 behandelt.

10. Verfahren nach Anspruch 7, dadurch gekennzeichnet, daß man die Schadpilze, deren Lebensaaum oder die von ihnen freizuhaltenden Pflanzen, Samen, Boden, Flächen, Materialien oder Räume mit 0,1 bis 10 kg/ha einer Verbindung der Formel II gemäß Anspruch 1 behandelt.

11. Verwendung einer Verbindung I gemäß Anspruch 1 zur Herstellung von fungizid wirksamen synergistischen Mischungen gemäß Anspruch 1.

12. Verwendung einem Verbindungen II gemäß Anspruch 1 zur Herstellung von fungizid wirksamen synergistischen Mischungen gemäß Anspruch 1.

**Claims**

1. A fungicidal mixture comprising

   a) the oxime ether carboxylic ester of the formula Ia or Ib

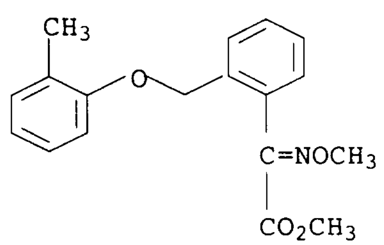

Ia

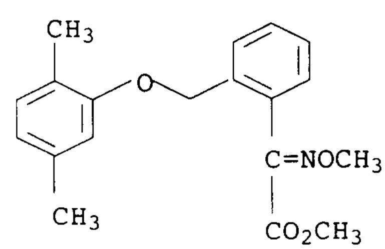

Ib

   and

   b) a dithiocarbamate (II) selected from the group consisting of

   - manganese ethylenebis(dithiocarbamate) (zinc complex) (IIa),
   - manganese ethylenebis(dithiocarbamate) (IIb),
   - zinc ammoniate ethylenebis(dithiocarbamate) (IIc) and
   - zinc ethylenebis(dithiocarbamate) (IId)

in a synergistically effective amount.

2. A fungicidal mixture as claimed in claim 1, comprising an oxime ether carboxylic ester of the formula Ia or Ib as set forth in claim 1 and manganese ethylenebis(dithiocarbamate) (zinc complex) (IIa).

3. A fungicidal mixture as claimed in claim 1, comprising an oxime ether carboxylic ester of the formula Ia or Ib as set forth in claim 1 and manganese ethylenebis(dithiocarbamate) (IIb).

4. A fungicidal mixture as claimed in claim 1, comprising an oxime ether carboxylic ester of the formula Ia or Ib as set forth in claim 1 and zinc ammoniate ethylenebis(dithiocarbamate) (IIc).

5. A fungicidal mixture as claimed in claim 1, comprising an oxime ether carboxylic ester of the formula Ia or Ib as set forth in claim 1 and zinc ethylenebis(dithiocarbamate) (IId).

6. A fungicidal mixture as claimed in claim 1, wherein the ratio by weight of compound II to compound I is from 50:1 to 2:1.

7. A method for controlling harmful fungi, which comprises treating the harmful fungi, their habitat or the plants, seeds, soil, areas, materials or rooms which are to be kept free of them with a compound of the formula I as set forth in claim 1 and a compound of the formula II as set forth in claim 1, the compounds I and II being used in synergistically effective amounts.

8. A method as claimed in claim 7, wherein a compound I as set forth in claim 1 and a compound II as set forth in claim 1 are applied simultaneously, conjointly or separately, or successively.

9. A method as claimed in claim 7, wherein the harmful fungi, their habitat or the plants, seeds, soil, areas, materials or rooms to be kept free of them are treated with from 0.005 to 0.5 kg/ha of a compound of the formula I as set forth in claim 1.

10. A method as claimed in claim 7, wherein the harmful fungi, their habitat or the plants, seeds, soil, areas, materials or rooms to be kept free of them are treated with from 0.1 to 10 kg/ha of a compound of the formula II as set forth in claim 1.

11. The use of a compound I as set forth in claim 1 for producing fungicidally effective synergistic mixtures as claimed in claim 1.

12. The use of a compound II as set forth in claim 1 for producing fungicidally effective synergistic mixtures as claimed in claim 1.

## Revendications

1. Mélange fongicide contenant

a) les esters d'acides oximéthercarboxyliques de formule Ia ou Ib

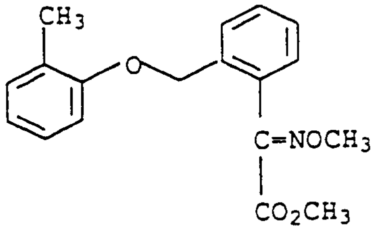

Ia

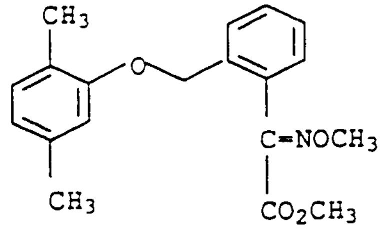

Ib

et

b) un dithiocarbamate II choisi parmi :

- l'éthylène-bis-(dithiocarbamate) de manganèse, (complexe de zinc) IIa,
- l'éthylène-bis-(dithiocarbamate) de manganèse IIb,
- l'éthylène-bis-(dithiocarbamate) ammoniacal de zinc IIc et
- l'éthylène-bis-(dithiocarbamate) de zinc IId

en quantité synergique efficace.

**2.** Mélange fongicide selon la revendication 1 contenant un amide d'acide oximéthercarboxylique de formule Ia ou Ib selon la revendication 1 et l'éthylène-bis(dithiocarbamate) de manganèse, (complexe de zinc) IIa.

**3.** Mélange fongicide selon la revendication 1 contenant un amide d'acide oximéthercarboxylique de formule Ia ou Ib selon la revendication 1 et l'éthylène-bis-(dithiocarbamate) de manganèse IIb.

**4.** Mélange fongicide selon la revendication 1 contenant un amide d'acide oximéthercarboxylique de formule Ia ou Ib selon la revendication 1 et l'éthylène-bis-(dithiocarbamate) ammoniacal de zinc IIc.

**5.** Mélange fongicide selon la revendication 1, contenant un amide d'acide oximéthercarboxylique de formule Ia ou Ib selon la revendication 1 et l'éthylène-bis-(dithiocarbamate) de zinc IId.

**6.** Mélange fongicide selon la revendication 1, caractérisé par le fait que les proportions relatives en poids entre le composé II et le composé I vont de 50 : 1 à 2 : 1.

**7.** Procédé pour combattre les mycètes nuisibles, caractérisé par le fait que l'on traite les mycètes nuisibles, leur habitat ou les végétaux, semences, sols, surfaces, matériaux ou locaux qu'on veut protéger contre les mycètes par un composé de formule I de la revendication 1 et un composé de formule II de la revendication 1, ces composés I et II étant utilisés en quantités synergiques efficaces.

**8.** Procédé selon la revendication 7, caractérisé par le fait que l'on applique un composé I de la revendication 1 et un composé II de la revendication 1 simultanément, ensemble ou séparément, ou successivement.

**9.** Procédé selon la revendication 7, caractérisé par le fait que l'on traite les mycètes nuisibles, leur habitat ou les végétaux, semences, sols, surfaces, matériaux ou locaux qu'on veut protéger contre les mycètes nuisibles par 0,005 à 0,5 kg/ha d'un composé de formule I de la revendication 1.

**10.** Procédé selon la revendication 7, caractérisé par le fait que l'on traite les mycètes nuisibles, leur habitat ou les végétaux, semences, sols, surfaces, matériaux ou locaux qu'on veut protéger contre les mycètes nuisibles par 0,1 à 10 kg/ha d'un composé de formule II selon la revendication 1.

**11.** Utilisation d'un composé I selon la revendication 1 pour la préparation de mélanges à activité fongicide synergique selon la revendication 1.

**12.** Utilisation d'un composé II selon la revendication 1 pour la préparation de mélanges à activité fongicide synergique selon la revendication 1.